# EUROPEAN PATENT SPECIFICATION

(11) **EP 3 613 320 B1**
(45) Date of publication and mention of the grant of the patent: **02.06.2021**
(21) Application number: 18189832.1
(22) Date of filing: 20.08.2018
(51) Int. Cl.: A47J 43/07, D06F 75/36, H05K 5/00

(54) **A HOUSING ASSEMBLY FOR A SMALL KITCHEN APPLIANCE**
GEHÄUSEANORDNUNG FÜR EIN KLEINES KÜCHENGERÄT
BOÎTIER POUR UN PETIT APPAREIL DE CUISINE

(43) Date of publication of application: 26.02.2020
(73) Proprietor: BSH Hausgeräte GmbH, 81739 München (DE)
(72) Inventor: Atelsek, Darko, 3331 Nazarje (SI); Gruber, Borut, 2380 Slovenj Gradec (SI); Pesec, Jurij, 3301 Petrovce (SI)

(56) References cited:
- EP-A1- 3 266 354
- WO-A2-2008/000621
- US-B2- 6 802 637

## Description

### Background of the Invention

The present invention relates to small kitchen appliances, more particularly to a housing assembly and its parts and a small kitchen appliance comprising a housing assembly.

### State of the Art

Small kitchen appliances such as blenders, food processors, juicers, stick mixers, stand mixers and hand mixers are semi-portable or portable appliances that are usually powered by electricity and as such include an electrical motor. The interior functional parts, such as an electrical motor, a gear assembly and a printed circuit board are enclosed in a housing to protect them from exterior environment, e.g. from material to be processed, water, dirt etc. The housing can comprise further elements that serve protective and/or decorative purposes. For example different parts of a housing, such as shells, covers and plates can be made of different materials and/or designed differently so that their exterior appearance is different.

There has been a trend for small kitchen appliances to use the latest technology, to be user-friendly and versatile and to adopt an appealing exterior design. The customers require that their appliances or machines are as appealing as possible so that for example they fit their kitchen design. On the other hand the appliance still has to fulfill protection and safety requirements, i.e. to protect a user from electrical parts of the appliance and the appliance interior from the environment. The design here is meant in its broadest sense comprising lines, contours, colours, shape etc. A possible way of accomplishing this task is to provide the housing with different decorative elements such as covers and plates. These can be made in one piece or consist of more elements and then be joined. If one wants to even improve usability and versatility of the appliance, a need arises to employ two or more cover plates of which at least one is transparent. This allows for integrating lighting means or protecting a special identification marking, e.g. an identification plate, appliance type, logotype of the producer, colour designation, precious ornamentation which is positioned on the housing shell. In this way the lighting means or an ornamentation are protected from exterior environment so that they cannot get dirty with a material to be processed or get damaged with other cooking utensils. Moreover, with a transparent cover plate the appearance of the appliance is much more attractive as without one.

In order not to have too many housing components, to simplify assembly and to cut costs an integration of non-transparent and transparent cover plates seems the most reasonable solution. There exist many methods of joining cover plates, for instance gluing, screwing, welding. The cover plates can also be made by using two-component injection moulding technology and are connected in this way.

However, all these methods have their drawbacks. For example, gluing is a time consuming method as glue first has to be applied to the parts to be glued and then it takes time to dry. Besides, there exists a number of combinations of a transparent and non-transparent material that does not allow for gluing as materials are not compatible.

Other mechanical joining techniques, such as screwing, are also time consuming processes and are not acceptable as far as appearance is concerned. The same goes for welding which often requires a use of a robot and is therefore complex and expensive. Even if a two-component injection moulding technology is very appropriate for joining various types of plastic materials, including plastics with contrasting properties, it cannot be employed in a mass production of low-cost small kitchen appliances where price is one of the most important factors.

EP 3 266 354 A1 discloses a housing assembly for small household appliance.

### Problem to be solved

It is an object of the present invention to overcome the above-mentioned shortcomings of the prior art and particularly to improve usability of a kitchen appliance in the most efficient and convenient way possible.

### Solution according to the invention

The object is achieved by a housing assembly according to the features of claim 1. Advantageous embodiments that can be implemented by themselves or in combination are described in dependent claims.

The invention relates to a housing assembly for a small kitchen appliance, comprising at least two shell parts, a base plate, a cover plate and a transparent plate, wherein the shell parts are configured to form a receiving area for receiving the base plate, wherein the cover plate on its lower end comprises a recessed portion of an essentially dovetail form for receiving the transparent plate, the recessed portion having cut-outs on its lateral sides adapted for engaging with lateral protrusions of the transparent plate and the cover plate having a groove adjacent to a periphery of the recessed portion adapted for engaging with a projection of the transparent plate to form an inseparable form-fitting attachment, wherein the so attached cover plate and the transparent plate are attachable to the base plate.

The dovetail recessed portion of the cover plate has essentially a form of an isoceles trapezoid. Thus, its lateral sides are straight and convex meaning that its extensions would intersect above the upper base. However, the bases are not straight. This is due to the fact that the cover plate is convex in relation to the rather flat base plate. The cut-outs are arranged on the lateral sides. The groove is realized on an outer contour of the recessed portion, more precisely on the cover plate adjacent to the upper base and lateral sides of recessed portion, i.e. on its periphery.

Lateral protrusions are arranged on the lateral sides of the transparent plate which are configured to fit the lateral sides of the recessed portion. The protrusions extend in an essentially perpendicular manner in relation to the cut-outs of the recessed portion and the base plate. When the protrusions are engaged with the tapered cut-outs, an engagement forms which prevents moving of the transparent plate with regard to the cover plate in the direction parallel to the long axis of the cover plate and away from the latter.

The cover plate is provided with a groove that is positioned adjacent to a periphery of the recessed portion. The groove is formed so that its bottom is at a right angle to the dovetail periphery of the recessed portion and is directed away from it. As such it is adapted for engaging with a projection of the transparent plate on its contour. The contour in this case is represented by the upper base and the lateral sides of the transparent plate. The lower base forms a lower edge of the transparent plate and at the same time of the cover plate. The engagement of the groove and the projection of the transparent plate prevents moving of the transparent plate perpendicular in relation to the long axis of the cover plate.

Both the engagement of the lateral protrusions of the transparent plate with the tapered cut-outs of the recessed portion and the engagement of the projection of the transparent plate with the groove of the cover plate form an inseparable attachment of the transparent plate to the cover plate.

The attached cover plate and the transparent plate actually represent an integral cover plate with a transparent portion.

The small kitchen appliance with which the housing assembly according to the invention is preferably used is a hand mixer. This kind of kitchen machine is compact and space-saving and is mainly used for mixing, beating cream, kneading dough, etc. Usually it is available with several processing speeds, sometimes even more than four.

However, the housing assembly according to the invention is also adapted to be used with other small household appliances, for examples irons.

The housing assembly according to the invention provides the following advantages:
- very simple, effective and strong mechanical joint not achievable with other joining techniques
- practically no gaps between edges of the panels, in particular the cover panel and the transparent panel, which allows for easy cleaning and appealing appearance
- improved sealing between the cover plate and the transparent panel so that there is no risk of ingress of material to be processed or environmental agents such as moisture or dust
- the cover panel and the transparent panel appear to be made in one piece, i.e. integrally, as the transparent panel is so firmly attached to the cover panel that it cannot move in relation to it
- low-cost solution suitable for a mass production
- upon dismantling the housing assembly the cover plate and the transparent plate being elements which are expensive to produce do not get damaged and can be reused.

The solution has to be simple and cost effective and has to enable a mass production.

### Embodiments of the invention

According to one embodiment an opening is arranged at the lower end of the base plate to accommodate a lighting means, e.g. LED lamps or a special ornamentation. Consequently, a cover plate also has an opening in the lower end of the recessed portion which basically dimensionally fits the opening in the base plate. In assembled state of the cover plate, transparent plate and the base plate both openings are then covered by the transparent cover and thus protected from exterior environment. In this way food processed by the kitchen appliances does not splash and soil the lighting means or the ornamentation of the appliance.

In an advantageous solution, the joined cover plate and transparent plate are attachable to the base plate via form-fitting. This has the effect that no extra holes and screws or bolts are needed. Besides, this also requires no extra material or a device for connection as in case of glueing, welding, etc.

The means for form-fitting of the base plate, are more precisely a snap-fit like cantilever hooks for engaging with openings on the bottom of the cover plate. Snap-fit creates a strong holding force. The connection of the cover plate and the transparent plate with the base plate is essentially inseparable. It is only possible to remove all the plates from the housing when disassembling the housing, i.e. both housing shells, in case of servicing the appliance, for instance.

The base plate is provided with at least a pair of anchoring elements adapted to receive connectors of the transparent plate. In the assembled state of the transparent plate, the cover plate and the base plate, the openings of the connectors are arranged on the anchoring elements of the base plate. Typically, the anchoring elements are protrusions of a conical shape.

This arrangement allows for even more secure connection of the transparent plate with the cover plate and the base plate as it prevents moving of the transparent plate with regard to the cover plate in the direction parallel to the long axis of the cover plate. On the other hand the gap between the edges of the plates is practically non-existent as the fit is very tight and secure.

In a preferred embodiment, the base plate is provided with a pair of openings adapted to engage with the lateral protrusions of the transparent plate. That being said the protrusions fit in the openings of the base plate in assembled state. This has the effect that the prevention of the movement of the transparent plate in the direction parallel to the long axis of the cover plate is improved.

In case the openings are equipped with a wall on its lower side that projects from the base plate the effect is even more significant.

The cover plate basically adopts a triangular form, but can also be of rectangular or oval form. Specifically, the cover plate is made of different material than the transparent plate and both preferably consist of a plastic material. Also the base plate consists in particular of a plastic material. The cover plate can also be provided with a metal coating, for example chromium coating, to improve the stiffness of the plate and to ensure a better exterior appearance of the appliance. The coating can be applied partly or entirely.

For the sake of clarity it should be emphasized that the expression lower in this application means where the recessed portion of the cover plate or more precisely the transparent plate is positioned. The recessed portion is usually arranged adjacent to the bottom or lower part of the appliance which during normal use of a small kitchen appliance is a side that faces the object to be processed. This holds even more true in this case where a lighting means is envisaged which provides light through the transparent plate to improve visibility of the contents of a container where a food is processed. However, this should in no way be interpreted as a limitation.

It should also be noted that a plate cannot be interpreted solely as a smooth flat thin piece of material. This term can also be used to define essentially thin objects which are not necessarily flat.

A second aspect of the invention is a small kitchen appliance comprising a housing assembly as described in claim 1 and the dependent claims.

### Brief description of the figures

Fig. 1 shows the small kitchen appliance
Fig. 2 shows the transparent plate, the cover plate and the base plate in exploded state
Fig. 3 shows the assembling of the base plate with the shell part
Fig. 4 shows the assembling of the transparent plate with the cover plate
Fig. 5 shows the assembling of the transparent plate and the cover plate in assembled state with the base plate
Fig. 6 shows the transparent plate, the cover plate and the base plate in assembled state in top view
Fig. 7 shows a cross-section of the transparent plate, the cover plate and the base plate in assembled state
Fig. 8 shows a cross-section of the transparent plate, the cover plate and the base plate in assembled state

### Detailed description

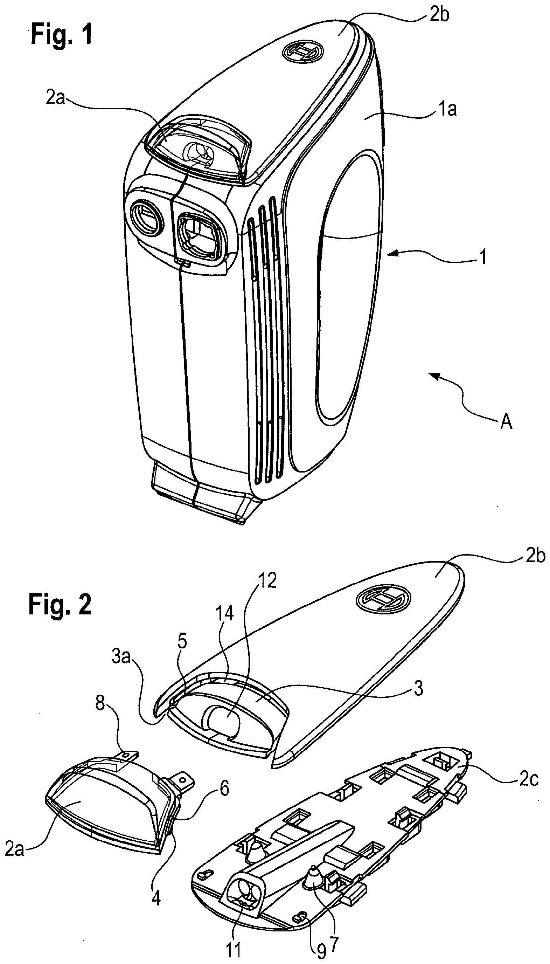

Fig. 1 depicts a small kitchen appliance A with a housing assembly 1 according to the invention. The housing assembly 1 is shown in an assembled state. The transparent plate 2a is attached to the cover plate 2b. The base plate is received in the receiving area and both are not depicted as they are covered by the cover plate 2b and the transparent plate 2a.

Fig. 2 shows the cover plate 2b, the transparent plate 2a and the base plate 2c in an exploded state. The cover plate 2b has a recessed portion 3 on its lower end. On the recessed portion 3 comes the transparent plate 2a. The connectors 8 fit the holes 14 of the cover plate 2b and are to be inserted in them. In assembled state they then engage with the anchoring elements 7 of the base plate 2c.

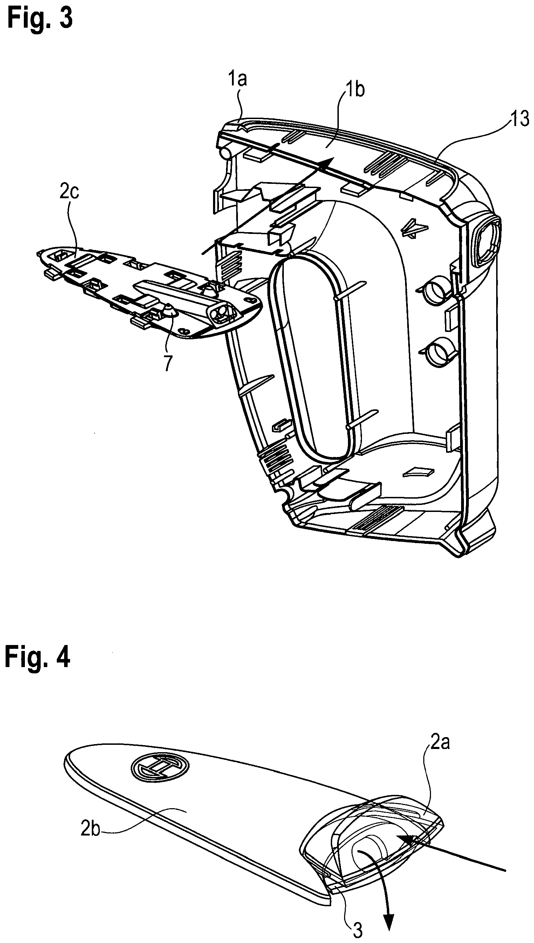

Fig. 3 shows a first step of assembling the housing assembly 1. The base plate 2c is put in a notch 13 of one shell part 1a, namely first shell part 1a. Then the other shell part 1a is pressed on the first shell part 1a so that both shell parts 1a form an attachment.

Fig. 4 depicts assembling of the transparent plate 2a with the cover plate 2b. The transparent plate 2a has to be inserted at an angle in relation to the cover plate 2b. First the connectors 8 are inserted in the holes 14 of the cover plate 2b as seen in the Fig. 2. Then the transparent plate 2a is pressed down on the recessed portion 3 of the cover plate 2b. During this step of assembling the transparent plate 2a has to slightly deform to snap on the cover plate 2b.

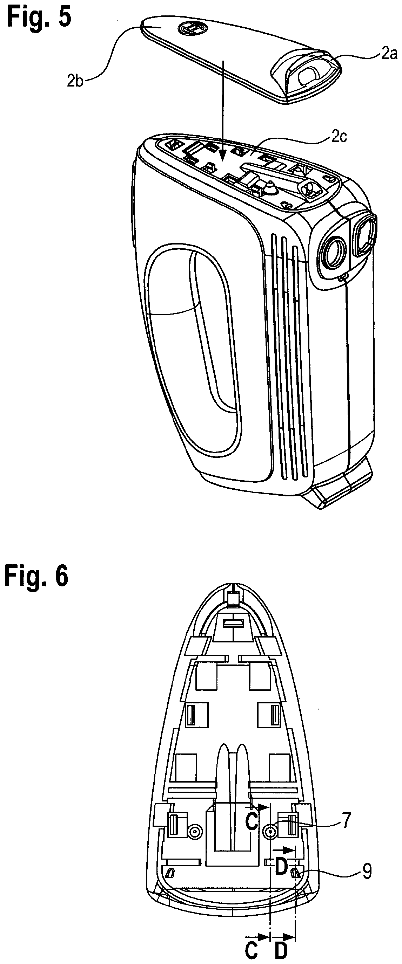

In Fig. 5, the last step of assembling the housing assembly 1 is shown. The transparent plate 2a and the cover plate that were attached in the previous step have now to be pressed on the base plate 2c to make an inseparable connection.

Fig. 6 depicts the transparent plate, the cover plate and the base plate in assembled state in top view. Two features can been seen, namely the anchoring element 7 and the opening 9 in the base plate 2c.

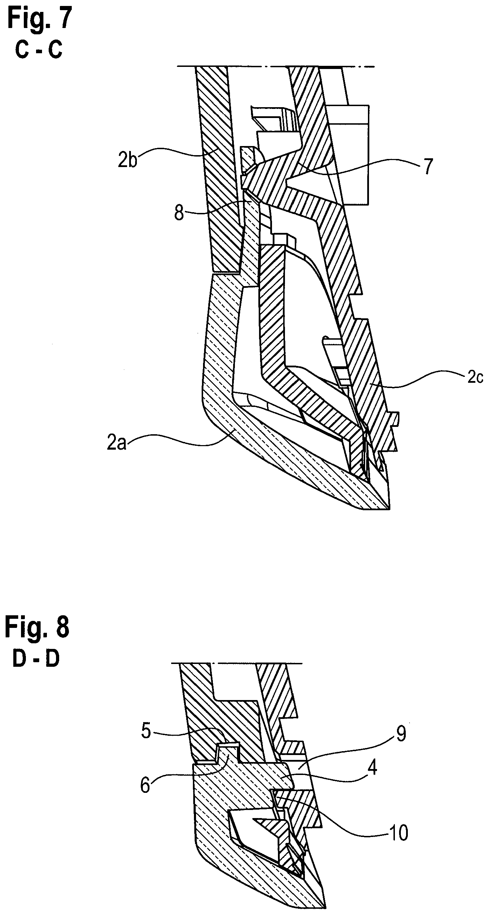

Fig. 7 shows a cross-section through the line C-C of the Fig. 6. The base plate 2c is provided with the anchoring element 7 which receives the connector 8 of the transparent plate 2a or more precisely its opening.

Fig. 8 depicts a cross-section through the line D-D of the Fig. 6. The base plate 2c is shown which is provided with a pair of openings 9 adapted to engage with the lateral protrusions 4 of the transparent plate 2a. The projection 6 of the transparent plate 2a is engagement with the groove 5 of the cover plate 2b. This prevents moving of the transparent plate 2a perpendicular in relation to the long axis of the cover plate 2b.

### Reference signs list

A small kitchen appliance
1 housing assembly
1a shell part
1b receiving area
2a transparent plate
2b cover plate
2c base plate
3 recessed portion
3a cut-out
4 lateral protrusion
5 groove
6 projection
7 anchoring element
8 connector
9 opening
10 wall
11 opening
12 opening
13 notch
14 hole

## Claims

1. A housing assembly (1) for a small kitchen appliance (A), comprising at least two shell parts (1a), a base plate (2c), a cover plate (2b) and a transparent plate (2a), wherein the shell parts (1a) are configured to form a receiving area (1b) for receiving the base plate (2b), **characterized in that** the cover plate (2b) on its lower end comprises a recessed portion (3) of an essentially dovetail form for receiving the transparent plate (2a), the recessed portion (3) having cut-outs (3a) on its lateral sides adapted for engaging with lateral protrusions (4) of the transparent plate (2a) and the cover plate (2b) having a groove (5) adjacent to a periphery of the recessed portion (3) adapted for engaging with a projection (6) of the transparent plate (2a) to form an inseparable form-fitting attachment, wherein the so attached cover plate (2b) and the transparent plate (2a) are attachable to the base plate (2c).

2. Housing assembly (1) according to claim 1, wherein the base plate (2c) is provided with at least a pair of anchoring elements (7) adapted to receive connectors (8) of the transparent plate (2a).

3. Housing assembly (1) according to any of the preceding claims, wherein the base plate (2c) is provided with a pair of openings (9) adapted to engage with the lateral protrusions (4) of the transparent plate (2a).

4. Housing assembly (1) according to claim 3, the openings (9) are equipped with a wall (10) on its lower side.

5. Housing assembly (1) according to any of the preceding claims, wherein the joined cover plate (2b) and transparent plate (2a) are attachable to the base plate (2c) via form-fitting.

6. Housing assembly (1) according to any of the preceding claims, wherein an opening (11) is arranged at the lower end of the base plate (2c) to accommodate a lighting means.

7. Housing assembly (1) according to claim 5, wherein the cover plate (2b) has an opening (12) in the lower end of the recessed portion (3).

8. Housing assembly (1) according to any of the preceding claims, wherein the cover plate (2b) is provided with a metal coating, for example chromium coating.

9. Housing assembly (1) according to any of the preceding claims, wherein the cover plate (2b) is made of different material than the transparent plate (2a).

10. Housing assembly (1) according to any of the preceding claims, the cover plate (2b), the transparent plate (2a) and the base plate (2c) consist of a plastic material.

11. A small kitchen appliance comprising a housing assembly (1) according to any of the preceding claims.

## Patentansprüche

1. Gehäusebaugruppe (1) für ein kleines Küchengerät (A), die mindestens zwei Schalenteile (1a), eine Grundplatte (2c), eine Deckplatte (2b) und eine durchsichtige Platte (2a) umfasst, wobei die Schalenteile (1a) so konfiguriert sind, dass sie einen Aufnahmebereich (1b) zum Aufnehmen der Grundplatte (2b) bilden, **dadurch gekennzeichnet, dass** die Deckplatte (2b) an ihrem unteren Ende einen vertieften Abschnitt (3) im Wesentlichen in Schwalbenschwanzform zum Aufnehmen der durchsichtigen Platte (2a) umfasst, wobei der vertiefte Abschnitt (3) an seinen lateralen Seiten Aussparungen (3a) aufweist, die so ausgelegt sind, dass laterale Vorsprünge (4) der durchsichtigen Platte (2a) darin eingreifen, und die Deckplatte (2b) eine an den Umfang des vertieften Abschnitts (3) angrenzende Nut (5) aufweist, die so ausgelegt ist, dass ein Ansatz (6) der durchsichtigen Platte (2a) darin eingreift, wodurch eine nicht trennbare, formschlüssige Verbindung entsteht, wobei sich die so angebrachte Deckplatte (2b) und die durchsichtige Platte (2a) an der Grundplatte (2c) anbringen lassen.

2. Gehäusebaugruppe (1) nach Anspruch 1, wobei die Grundplatte (2c) mit zumindest zwei Verankerungselementen (7) versehen ist, die so ausgelegt sind, dass sie Verbindungsstücke (8) der durchsichtigen Platte (2a) aufnehmen.

3. Gehäusebaugruppe (1) nach einem der vorhergehenden Ansprüche, wobei die Grundplatte (2c) mit zumindest zwei Öffnungen (9) versehen ist, die so ausgelegt sind, dass die lateralen Vorsprünge (4) der durchsichtigen Platte (2a) darin eingreifen.

4. Gehäusebaugruppe (1) nach Anspruch 3, wobei die Öffnungen (9) an ihrer unteren Seite mit einer Wand (10) versehen sind.

5. Gehäusebaugruppe (1) nach einem der vorhergehenden Ansprüche, wobei sich die Deckplatte (2b) und die durchsichtige Platte (2a), die miteinander verbunden sind, formschlüssig an der Grundplatte (2c) anbringen lassen.

6. Gehäusebaugruppe (1) nach einem der vorhergehenden Ansprüche, wobei an dem unteren Ende der Grundplatte (2c) eine Öffnung (11) zum Unterbringen eines Beleuchtungsmittels angeordnet ist.

7. Gehäusebaugruppe (1) nach Anspruch 5, wobei die Deckplatte (2b) in dem unteren Ende des vertieften Abschnitts (3) eine Öffnung (12) aufweist.

8. Gehäusebaugruppe (1) nach einem der vorhergehenden Ansprüche, wobei die Deckplatte (2b) mit einer Metallbeschichtung, zum Beispiel einer Chrombeschichtung, versehen ist.

9. Gehäusebaugruppe (1) nach einem der vorhergehenden Ansprüche, wobei die Deckplatte (2b) aus anderem Material hergestellt ist als die durchsichtige Platte (2a).

10. Gehäusebaugruppe (1) nach einem der vorhergehenden Ansprüche, wobei die Deckplatte (2b), die durchsichtige Platte (2a) und die Grundplatte (2c) aus einem Kunststoffmaterial bestehen.

11. Kleines Küchengerät mit einer Gehäusebaugruppe (1) nach einem der vorhergehenden Ansprüche.

## Revendications

1. Ensemble boîtier (1) pour un petit appareil de cuisine (A), comprenant au moins deux parties de coque (1a), une plaque de base (2c), une plaque de recouvrement (2b) et une plaque transparente (2a), dans lequel les parties de coque (1a) sont configurées afin de former une zone de réception (1b) permettant de recevoir la plaque de base (2b), **caractérisé en ce que** la plaque de recouvrement (2b), sur son extrémité inférieure, comprend une partie évidée (3) d'une forme essentiellement en queue d'aronde permettant de recevoir la plaque transparente (2a), la partie évidée (3) présentant des découpes (3a) sur ses côtés latéraux adaptées pour une mise en prise avec des saillies latérales (4) de la plaque transparente (2a) et la plaque de recouvrement (2b) présentant une rainure (5) adjacente à une périphérie de la partie évidée (3) adaptée pour une mise en prise avec une saillie (6) de la plaque transparente (2a) afin de former une fixation par complémentarité de forme inséparable, dans lequel la plaque de recouvrement (2b) et la plaque transparente (2a) ainsi fixées peuvent être fixées à la plaque de base (2c).

2. Ensemble boîtier (1) selon la revendication 1, dans lequel la plaque de base (2c) est pourvue d'au moins une paire d'éléments d'ancrage (7) adaptés afin de recevoir des connecteurs (8) de la plaque transparente (2a).

3. Ensemble boîtier (1) selon l'une quelconque des revendications précédentes, dans lequel la plaque de base (2c) est pourvue d'une paire d'ouvertures (9) adaptées pour une mise en prise avec les saillies latérales (4) de la plaque transparente (2a).

4. Ensemble boîtier (1) selon la revendication 3, dans lequel les ouvertures (9) sont équipées d'une paroi (10) sur leur face inférieure.

5. Ensemble boîtier (1) selon l'une quelconque des revendications précédentes, dans lequel la plaque de recouvrement (2b) et la plaque transparente (2a) jointes peuvent être fixées à la plaque de base (2c) par complémentarité de forme.

6. Ensemble boîtier (1) selon l'une quelconque des revendications précédentes, dans lequel une ouverture (11) est agencée à l'extrémité inférieure de la plaque de base (2c) afin de recevoir des moyens d'éclairage.

7. Ensemble boîtier (1) selon la revendication 5, dans lequel la plaque de recouvrement (2b) présente une ouverture (12) dans l'extrémité inférieure de la partie évidée (3).

8. Ensemble boîtier (1) selon l'une quelconque des revendications précédentes, dans lequel la plaque de recouvrement (2b) est pourvue d'un revêtement métallique, par exemple un revêtement de chrome.

9. Ensemble boîtier (1) selon l'une quelconque des revendications précédentes, dans lequel la plaque de recouvrement (2b) est réalisée en un matériau différent de la plaque transparente (2a).

10. Ensemble boîtier (1) selon l'une quelconque des revendications précédentes, dans lequel la plaque de recouvrement (2b), la plaque transparente (2a) et la plaque de base (2c) sont constituées d'une matière plastique.

11. Petit appareil de cuisine comprenant un ensemble boîtier (1) selon l'une quelconque des revendications précédentes.
